# EUROPEAN PATENT SPECIFICATION

(11) **EP 0 230 212 B1**
(45) Date of publication and mention of the grant of the patent: **09.11.1994**
(21) Application number: 86830382.7
(22) Date of filing: 18.12.1986
(51) Int. Cl.: C08L 23/02, C08L 23/16

(54) **A process for the preparation of plasto-elastomeric compounds from polyolefins and EPDM terpolymers and the plasto-elastomeric compounds thus obtained**
Thermoplastische Elastomer-Zusammensetzungen aus Polyolefinen und EPDM-Terpolymeren und Verahren zu deren Herstellung
Procédé pour la fabrication d'élastomères thermoplastiques à base de polyoléfines et de terpolymères EPDM, et les élastomères thermoplastiques obtenus par ce procédé

(30) Priority: 20.12.1985 IT 365685
(43) Date of publication of application: 29.07.1987
(73) Proprietor: SO.F.TER S.p.A., I-47100 FORLI' (IT)
(72) Inventor: Carfagnini, Italo, I-47100 Forli' (IT)
(74) Representative: Lanzoni, Luciano

(56) References cited:
- EP-A- 0 046 285
- LU-A- 46 240
- US-A- 4 010 223

## Description

The invention disclosed relates to a process for the preparation of a plasto-elastomeric composition from at least one thermoplastic olefin resin and at least one ethylene propylene terpolymer, and to a plasto-elastomeric composition obtained by implementation of such a process. The preparation of thermoplastics from α-olefin resins and EPDM terpolymeric elastomers has long constituted prior art in the field in question, e.g. as in FR 2 408 632 published 1978. In the preparation methods disclosed by these two references, the cross-linking agent employed is either a halogenated phenolic resin, or a non-halogenated phenolic resin associated with halogen donors.

US 4 477 631, published in 1984, discloses the association of a non-halogenated phenolic resin with metal oxides or carbonates; processability is thus enhanced in comparison to the two references first mentioned.

Other elastomer vulcanizing techniques that fall within the general scope of preparing a plasto-elastomeric composition from α-olefin plastomers and EPDM elastomers, thermodynamically cross-linked, are described in DE 2 401 149, published 1974, also in US 3 884 882, published 1974, which disclose initial bonding of the elastomeric copolymers with maleic anhydride so as to ensure their being cross-linked and rendered more compatible with the plastomer materials contained in the compounds.

Finally, the prior art also embraces methods for the preparation of plasto-elastomeric composition wherein the elastomeric constituent is cross-linked thermodynamically employing conventional agents such as are used in the rubber industry, namely, sulphur or its donors, organic peroxides, quinone derivatives, guanidine, azides, sulphenazides, amines, xanthates, urea, triazoles, imidazoles, sulphenamides, cyanide compounds, isocyanates, and paraquinondioxin (as disclosed in GB 2 011 430, published 1978, also in US 3 806 558 and US 3 037 954, both published 1973, and US 3 758 643 and 3 862 106, both published 1974. There are drawbacks common to all the thermodynamic vulcanization methods embraced by the prior art, the effect of which is to impose marked limitations on the use of the compound, and/or on the possibility of its being manufactured with ease. For example, cross-linking of the rubbery component (EPDM) is uneven by reason of the poor dispersion of cross-linking agents within the given plasto-elastomeric composition as a whole, once temperature levels equal to or higher than that of the plastomer's melting point are reached, as vulcanization of the elastomer content commences at temperatures of this order. Other processes protected by letters patent tend to disclose over-long reaction times and excessively high temperatures, which are not practicable at industrial level.

Accordingly, the object of the invention is that of setting forth a new process that improves on prior art methods, inasmuch as the plasto-elastomeric compound is more easily processed, and operating conditions are engineered in a way such as enhances feasibility of the process on industrial scale. More exactly, the object is one of developing a process that will be ensured free from the drawbacks mentioned above, especially in terms of avoiding environmental and personal risk stemming from the production of chlorine, and require considerably lower temperatures and less time for implementation than the processes employed hitherto.

The stated object can be realized to surprisingly good effect, using a non-halogenated phenolic resin in conjunction with a given aromatic carboxylic acid to bring about thermodynamic cross-linking of the EPDM elastomeric content present in the plasto-elastomeric compound.

In one aspect of the present invention, there is provided a process for preparing a plasto-elastomeric composition comprising at least one EPDM elastomer and at least one polyolefin and having the elastomeric phase partially or fully crosslinked, wherein mixtures containing from 10% to 80% by weight of EPDM terpolimer are subjected to mastication at a temperature equal or higher than the melting point of the olefinic thermoplastic and for a sufficient period of time to ensure a thorough mix and a partial or full crosslinking of EPDM rubbery phase contained in the mixture itself in the presence of a crosslinking system consisting of 0.5-15 parts by weight, per 100 parts of EPDM, of a non-halogenated phenolic resin and salicylic acid.

In another aspect of the present invention, there is provided a plasto-elastomeric composition comprising at least one EPDM elastomer and at least one polyolefin and having the elastomeric phase partially or fully crosslinked, wherein crosslinking is achieved by means of salicylic acid and a non-halogenated phanolic resin of formula 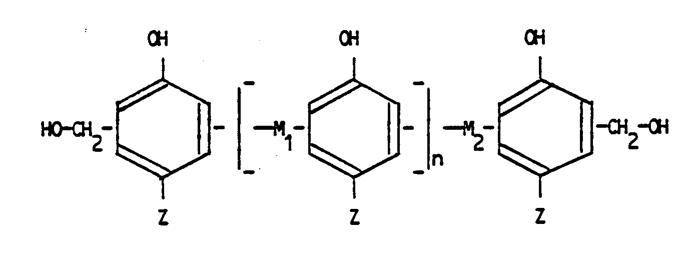
wherein
M1 and M2, which may be the same or different, are -CH2- or -CH2-CO-CH2- radicals,
Z is an alkenyl, aryl or alkyl radical having from 4 to 16 carbon atoms and
n is an integer from 0 to 6.

More exactly, the cross-linking non-halogenated phenolic resin is an alkylphenol-formaldehyde resin having the general formula: 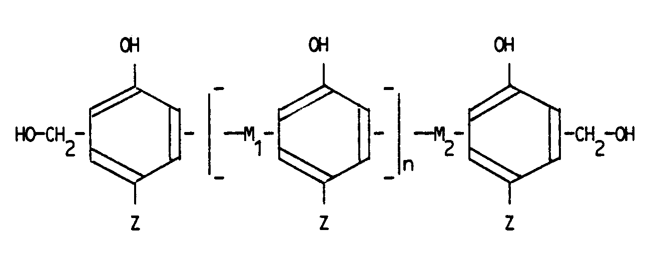
where
M₁ and M₂ are radicals -CH₂- or 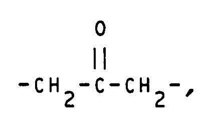
which can be the same or different;
Z is an alkenyl, aryl or alkyl radical having from 4 to 16 carbon atoms;
n is an integer between 0 and 6.

In a preferred version of the process, the phenolic resin will be a phenol-formaldehyde type resol with the following written formula: 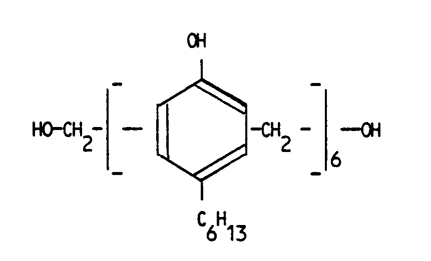
To achieve cross-linking, the non-halogenated phenolic resin must be utilized together with an aromatic carboxylic acid, and according to the invention, salicylic acid has proved especially suitable to the purpose -viz,
chemical formula: 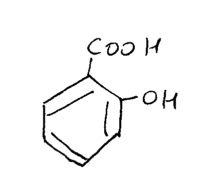
molecular weight: 138.12
melting point: 159 °C
specific weight: 1.37 g/cc
The vulcanizing method adopted according to the invention thus consists in the combination of an alkylphenol-formaldehyde resin, preferably phenolformaldehyde resol, with salicylic acid, wherein, preferably, 0.1 to 0.8 parts acid are admixed, by weight, to each part resin.

The process for preparation of plastomer-elastomer compounds may be carried out using equipment of the conventional type employed in plastics and/or rubber manufacture, namely Banbury mixers, compounding augers, Buss mixers &c. to work up mixtures containing 10 to 80% by weight of EPDM terpolymer (at least two α-olefin monomers and at least one diene monomer), and a cross-linking agent consisting in 0.5 15 parts by weight per 100 parts EPDM of a non-halogenated phenolic resin to which salicylic acid is admixed at a rate of between 0.1 and 0.8 parts per 1 part resin, likewise by weight. The reaction occurs at a temperature equal to or higher (preferably higher) than that of the melting point of the olefin thermoplastic employed, and for a duration sufficient to ensure a thorough mix, and partial or total (preferably total) cross- linking of the rubbery EPDM.

The operation can be effected in any single one of the compounding machines described above, or using a train of machines (e.g. Banbury mixer-+-extruder, dry turbo mixer-+-twin-auger extruder, or Banbury-+-Buss &c...). Whatever the ultimate choice of plant, the process must be implemented dynamically, with duration, temperature and rotational speed of the machine such as will ensure the following sequence of steps:
a) mastication of the EPDM elastomer and fusion of the polyolefin plastomer;
b) thorough dispersion of the components;
c) cross-linking of the elastomeric component;
d) even dispersion of any other additives.

Proceeding thus, it becomes possible to obtain a fine dispersion of the cross-linked EPDM elastomer (indiscrete phase), merged with the molten plastomer (discrete phase) and assuming the form of minute nodular particles measuring some 0.1 to 1.5 µm in diameter.

The ideal process temperature would be of an order of 160 to 240 °C, whereas the mastication time lapse will depend upon:
a) the degree of EPDM elastomer cross-linking it is wished to achieve;
b) the proportion of diene, by weight, in the EPDM polymer chain;
c) the proportion, by weight, of the cross-linking agents employed (phenolic resin + salicylic acid).

The following observations must also be made with regard to the single components:
1) the EPDM should be linked at a rate of between 10 and 100% by weight of the total amount incorporated into the compound; the ideal proportion is 58 to 98%, by weight;
2) the proportion of diene in the EPDM, a parameter which is determined by the degree of unsaturation and generally expressed as parts diene per 100 parts elastomer (by weight), can vary between 1 and 15%; the process will be best implemented utilizing EPDM elastomers containing between 3 and 8% diene, by weight;
3) the quantities by weight of dynamic cross-linking agent to be admixed to the EPDM elastomer should be between 0.5 and 15 parts phenolic resin, and between 0.05 and 12 parts salicylic acid.

A thermodynamically cross-linked plasto-elastomeric mix according to the invention may include additives of the types used conventionally for such compounds -viz, strengtheners, whether organic (carbon black) or inorganic (silica and silicates), plasticizers (mineral oils, wax, paraffin), fillers (carbonates, kaolin, talc, calcined clay, heavy spar, asbestos and the like), antioxidants, ozone and ultra-violet inhibitors, peptizing agents and anticoagulants, organic and inorganic pigments, vulcanizing agents. All of the components employed in formulation of a given plasto-elastomeric composition according to the invention are either conventional substances, or substances which can be prepared using processes embraced by the prior art. The following definitions are given by way of example.

EPDM terpolymers, as envisaged in the terms of the invention, are prevalently amorphous polymers which consist of ethylene, with at least one α-olefin (propylene or 1-butene) and at least one diene that may be linked with the principal polymer chain or otherwise, and consists of the following monomers: ethylidene-norbornene, 1,4-hexadiene, dicyclopentadiene, 2-methyl-1,4-pentadiene, 1,4,9-decatriene, 1,5-cyclooctadiene, 1-methyl-1,5-cyclooctadiene, 1,4-cyclopentadiene, polybutene, polybutadiene, and their substitute derivatives.

Such terpolymers have molecular weight of between 50,000 and 800,000, an ethylene content of between 20 and 80% mol., and bonded diene content of between 1 and 15 parts per 100 parts polymer, by weight; the remainder will consist of an α-olefin, which may be propylene or butylene.

Olefin plastomers, likewise within the scope of the invention, are olefin copolymers obtained by the interreaction of olefinic monomers such as ethylene, propylene, 1-butene, 1-pentene, 1-hexene, 4-methyl-1-pentene, 3-methyl-1-pentene, 3,3-dimethyl-1-butene 3-methyl-1-hexene and 2,4,4-trimethyl-1-pentene. The copolymerization of homogeneous or non-homogeneous monomers ('random' copolymers) is brought about in the presence of metallic/organic catalyst compounds (e.g. - AlEt₃, AlEt₃Cl, Al is Bu₃) together with soluble vanadium compounds (e.g. VCl₄, VOCl₃, VAC₃), where Et = ethylene, AC = acetylacetone, and is Bu = isobutyl).

Phenolic resins, i.e. as represented by the general formula given above, are those which can be prepared by condensation of alkyl-phenols with formaldehyde, for example as described in volume 2 of Kunstoffe, pp19...21 (published 1962).

Plasto-elastomeric compositions obtainable by way of the process disclosed would be used in a number of industrial applications, for example:
a) rigid plastic items manufactured using injection, transfer, compression and blow moulding techniques;
b) extruded items, including sheaths for electrical wires and cable;
c) laminated, or 'sheet' material turned out by two or more mill rolls and utilized generally for damp-and weatherproofing;
d) modification of other materials by addition of appropriate percentage quantities of the compounds disclosed herein.

Additives might be formulated for the purpose of enhancing the processability and/or properties of materials such as olefin plastomers, natural and synthetic elastomers, bitumen, asphalts, lubricating oils, adhesives, and polyamine polymers.

Compounds according to the invention can also be utilized dissolved in organic solvents, in any given proportions by weight, for the treatment of natural and/or synthetic fibre fabrics, metal and timber surfaces, cellulose compositions, non-woven fabrics and cement mortar.

The three examples listed below are illustrative of compounds obtainable by implementation of a process as disclosed, though it will be appreciated that no limitation of the basic concept is implied.

### Example 1

Plasto-elastomeric compositions are prepared in a Banbury mixer of 6 litres fluid capacity (rotor speed 45 rpm), utilizing components of the type and in the proportions by weight indicated in table 1 (tests A, B, C, D and E).

The EPDM elastomer is put in first and masticated for 30 seconds at an initial temperature of 160 °C, whereupon the polypropylene plastomer and paraffin oil plasticizer are added. Mastication is continued until the rubbery phase is brought about, with complete fusion of the polypropylene, hence its full and even dispersion. This operation requires some two minutes, during which time the temperature in the mixer will rise to 190 °C as a result of the shear strain and friction generated. Next follows admixture of the cross-linking agents, resol and salicylic acid. The components are now masticated further (5 minutes approx) until the EPDM has been fully cross-linked; temperature of the material as it emerges from the machine will be 200 °C approx. In addition to the mix proportions, table 1 shows physical and mechanical properties of the compounds produced, and the essential physical and structural composition of the plastomers, the elastomers and the plasticizers envisaged in this first example. Also listed are the ASTM methods adopted for tests on physical and mechanical properties.

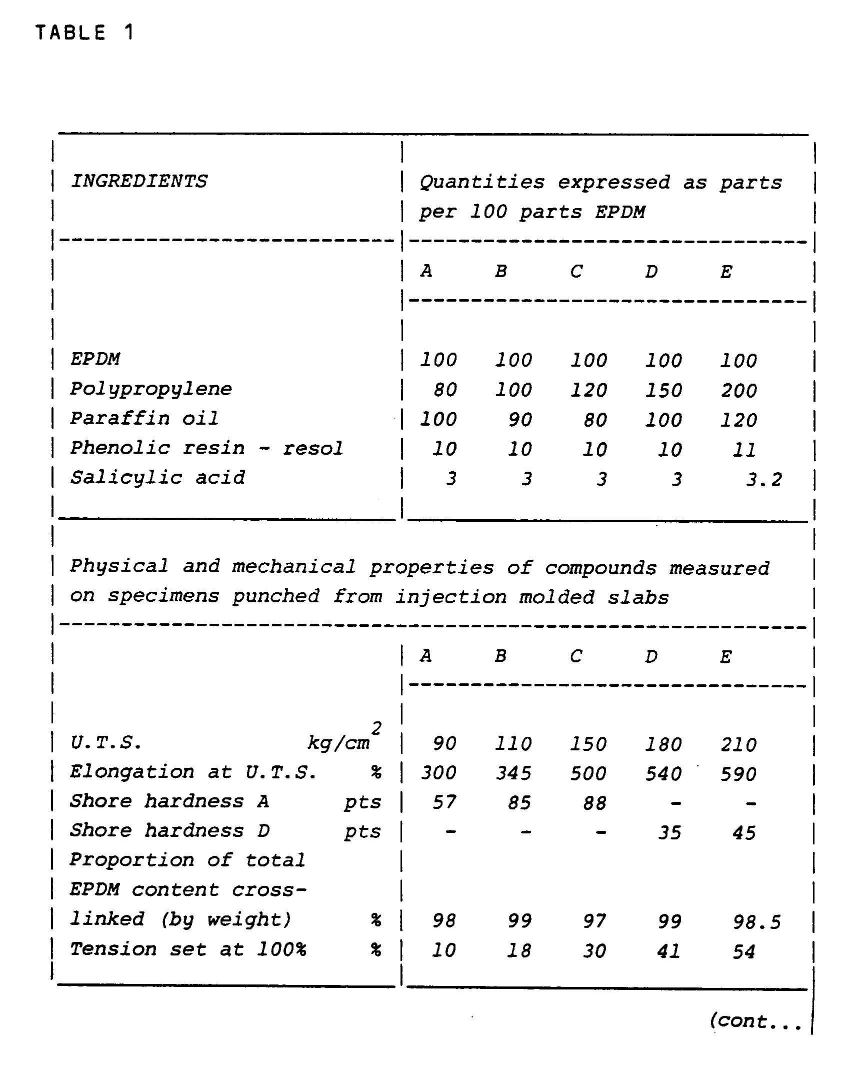

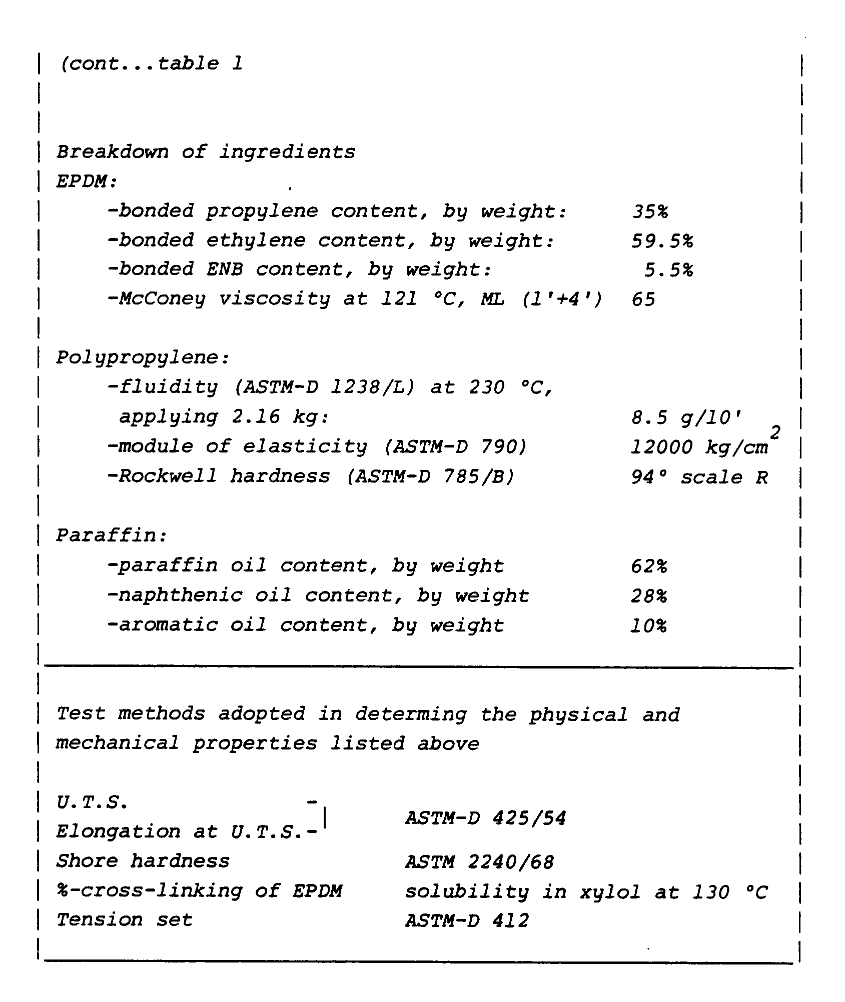

### Example 2

The mixing procedure is the same as that utilized in example 1, though employing plasto-elastomeric compositions with different physical and structural properties -viz,
- EPDM containing 45% by weight of bonded propylene, 51.5% by weight bonded ethylene, and 3.5% by weight bonded ENB (ethylidene-norbornene);
- polypropylene possessing fluidity of 0.75 g/10′ at 230 °C, applying 2.16 kg (ASTM-D 1238/L), modulus of elasticity of 13500 kg/cm² (ASTM-D 790), and scale R Rockwell hardness of 90° (ASTM-D 785/B).

Other ingredients remain the same as in example 1, likewise the ASTM test methods by which physical and mechanical properties are determined.

Table 2 illustrates the composition and the physical and mechanical properties of thermoplastic compounds from tests A, B, C, D, E as envisaged in example 2.

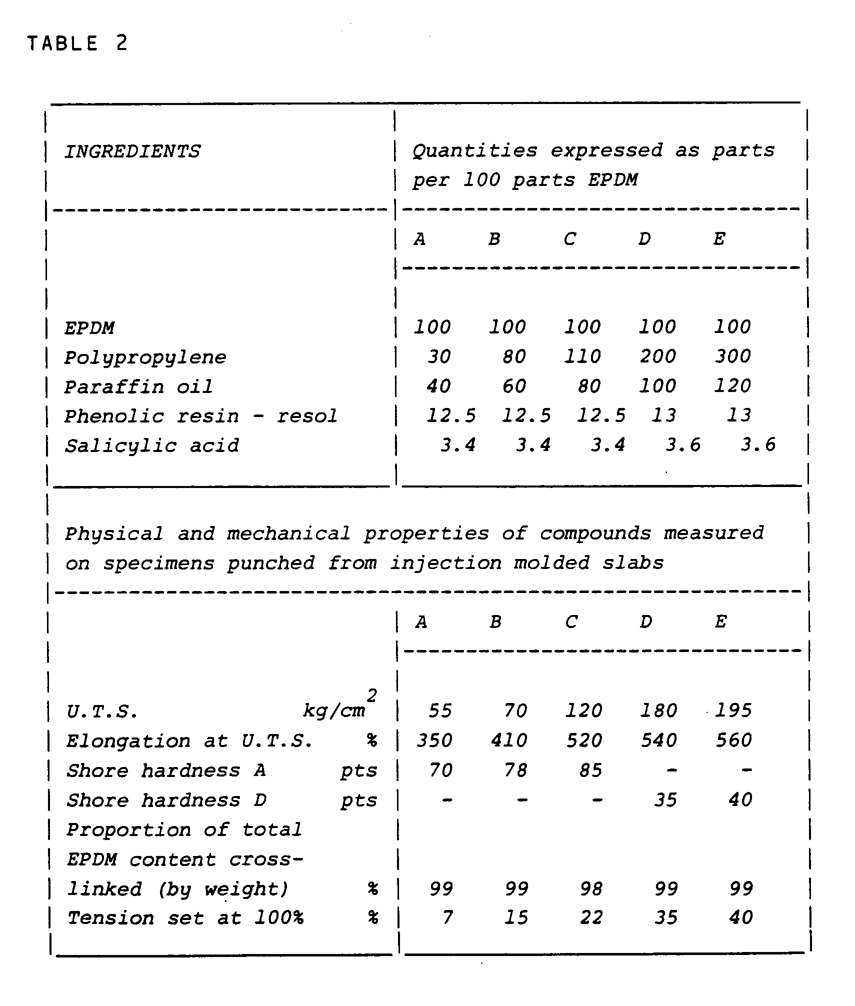

### Example 3

The mixing procedure is the same as that utilized in example 1, though employing plasto-elastomeric compositions with different physical and structural properties to those of the first two examples: -viz,
- EPDM, an oil, mingled at a rate of 23% by weight with an oil of substantially paraffin composition and containing 32 parts bonded propylene per 100 parts of the pure polymer (without oil), 61 parts bonded ethylene per 100 of the pure polymer, and 7 parts bonded ENB (ethylidene-norbornene) per 100 of pure polymer;
- polypropylene, a random copolymer consisting of 98% polypropylene and 2% polyethene, by weight, which possesses fluidity of 6 g/10′ at 230 °C, applying 2.16 kg (ASTM-D 1298/L), modulus of elasticity of 850 kg/cm² (ASTM-D 790), and Rockwell hardness of 79°, scale R (ASTM-D 256).

Other ingredients remain the same as in examples 1 and 2, likewise the ASTM test methods adopted. Table 3 overleaf illustrates the composition and the physical and mechanical properties of thermoplastic compounds obtained from tests A, B, C, D and E as envisaged in example 3.

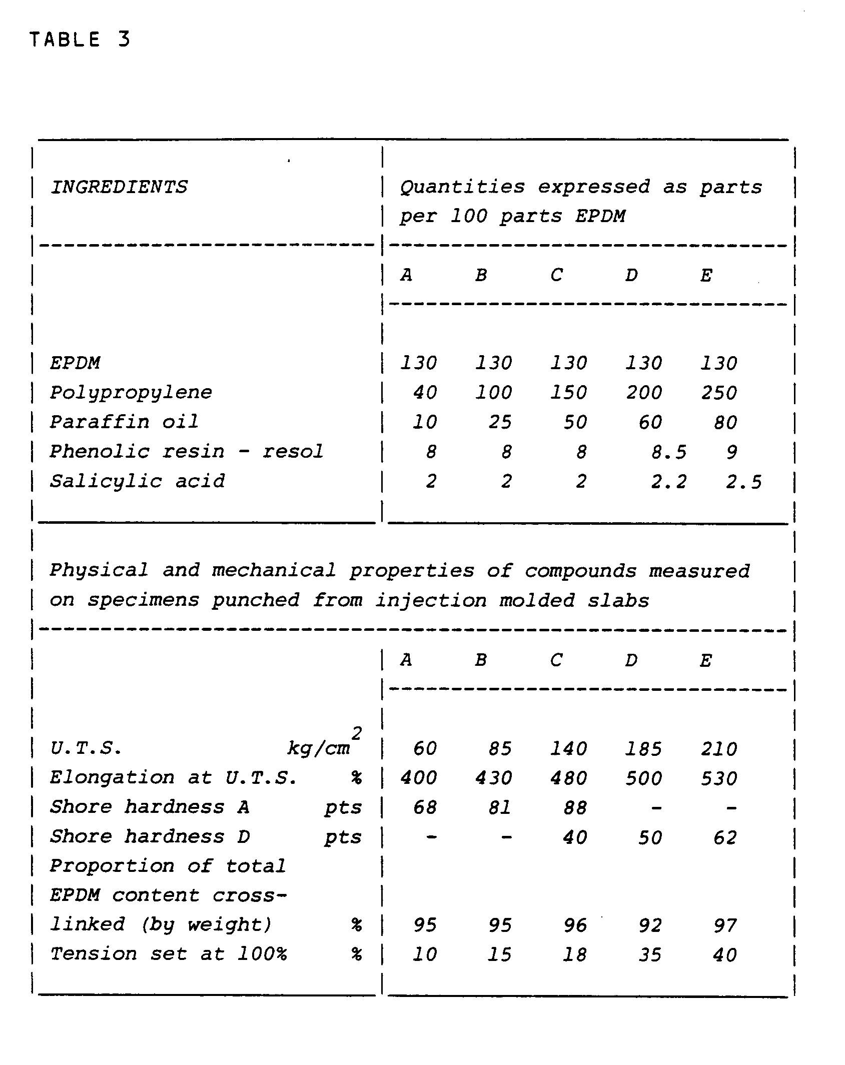

## Claims

1. Process for preparing a plasto-elastomeric composition comprising at least one EPDM elastomer and at least one polyolefin and having the elastomeric phase partially or fully crosslinked, characterized in that mixtures containing from 10% to 80% by weight of EPDM terpolymer are subjected to mastication at a temperature equal or higher than the melting point of the olefinic thermoplastic and for a sufficient period of time to ensure a thorough mix and a partial or full crosslinking of EPDM rubbery phase contained in the mixture itself in the presence of a crosslinking system consisting of 0.5-15 parts by weight, per 100 parts of EPDM, of a non-halogenated phenolic resin and salicylic acid.

2. Process according to claim 1, characterized in that the mastication temperature ranges from 160 to 240°C

3. Process according to claim 1 and claim 2, characterized in that the non-halogenated phenolic resin corresponds to the following general formula 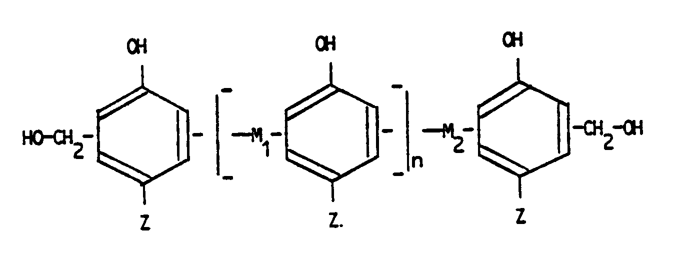 wherein
M1 and M2, which may be the same or different, are -CH2- or -CH2-CO-CH2- radicals,
Z is an alkenyl, aryl or alkyl radical containing from 4 to 16 carbon atoms, and
n is an integer from 0 to 6.

4. Process according to any of the preceeding claims, characterized in that the phenolic resin is a phenolformaldehyde resin of formula

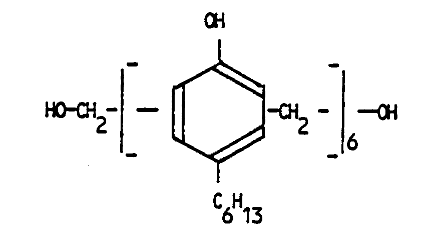

5. Process according to any of the preceeding claims, characterized in that salicylic acid is present in the composition in an amount of from 0.05 to 12 parts by weight per 100 parts by weight of EPDM elastomer.

6. A plasto-elastomeric composition comprising at least one EPDM elastomer and at least one polyolefin and having the elastomeric phase partially or fully crosslinked, characterized in that crosslinking is achieved by means of salicylic acid and a non-halogenated phenolic resin of formula 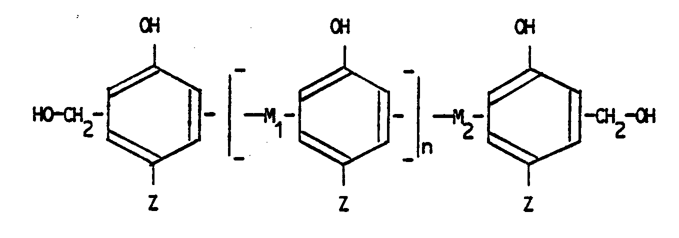 wherein
M1 and M2, which may be the same or different, are -CH2- or -CH2-CO-CH2- radicals,
Z is an alkenyl, aryl or alkyl radical having from 4 to 16 carbon atoms and
n is an integer from 0 to 6.

7. A plasto-elastomeric composition according to claim 6, characterized in that the phenolic resin is a phenol-formaldehyde resin of formula

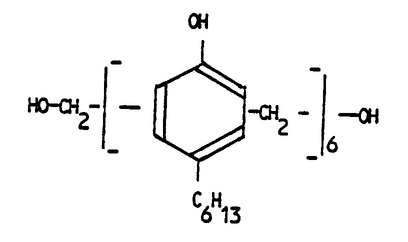

8. A plasto-elastomeric composition according to claim 6 and claim 7, characterized in that the olefinic monomer from which the polyolefin is obtained is selected from the group consisting of ethylene, propylene, butene-1, pentene-1, hexene-1, 4-methyl-1-pentene, 3-methyl-1-pentene, 3,3-dimethyl-1-butene, 3-methyl-1-hexene and 2,4,4-trimethyl-1-pentene.

9. A plasto-elastomeric composition according to claim 6 to 8, characterized in that the EPDM terpolymer consists of at least two olefinic monomers and a diene monomer.

10. A plasto-elastomeric composition according to claims 6-9, characterized in that the diene monomer is selected from the group consisting of ethylene-norbornene, 1,4-hexadiene, dicyclopentadiene, 2-methyl-1,4-pentadiene, 1,4,9-decatriene, 1,5-cyclooctadiene, 1-methyl-1,5-cyclooctadiene, 1,4-cyclopentadiene, polybutene, polybutadiene and their derivatives.

11. A plasto-elastomeric composition according to claims 6-10, characterized in that salicylic acid is present in the composition in an amount of from 0.05 to 12 parts by weight per 100 parts by weight of EPDM elastomer.

12. A plasto-elastomeric composition according to claim 6-11 characterized in that the salicylic acid:non-halogenated phenolic resin weight ratio is from 0.1:1 to 0.8:1.

13. A plasto-elastomeric composition according to claims 6-12, characterized in that it contains from 10 to 90% of polyolefin and from 90 to 10% of EPDM terpolymer.

14. A plasto-elastomeric composition according to claims 6-13, characterized in that the olefinic monomers are ethylene and/or propylene and/or 1-butene.

15. A plasto-elastomeric composition according to claim 6-14, prepared according to the process of claim 1 to 5 and suitable for the manufacture of moulded, extruded and laminated articles.

## Patentansprüche

1. Verfahren zur Herstellung von Elastomer-Zusammensetzungen, enthaltend wenigstens ein EPDM-Elastomer und wenigstens ein Polyolefin, wobei die elastomerische Phase teilweise oder voll vernetzt ist, **dadurch gekennzeichnet**, dass die voll 10% bis 80% Gewichtsanteil an EPDM-Terpolymer enthaltenden Mischungen einem Knetvorgang bei einer Temperatur unterliegen, die gleich oder höher ist als die des Schmelzpunktes der olefinen Thermoplaste, und der eine ausreichende Dauer haben muss, so dass ein gründliches Mischen und ein teilweises oder vollständiges Vernetzen der elastomerischen Phase des EPDM gewährleistet ist, enthalten in der Mischung selbst bei Vorhandensein eines Vernetzungssystems, bestehend aus 0.5 - 15 Gewichtsanteilen eines nicht-halogenisierten Phenolharzes und Saliyzlsäure auf 100 Teile EPDM.

2. Verfahren nach Patentanspruch 1, **dadurch gekennzeichnet**, dass die Knettemperatur in einen, Bereich von 160 bisd 240°C liegt.

3. Verfahren nach Patentanspruch 1 und nach Patentanspruch 2, **dadurch gekennzeichnet**, dass das nicht-halogenisierte Phenolharz folgender genereller Formel entspricht: 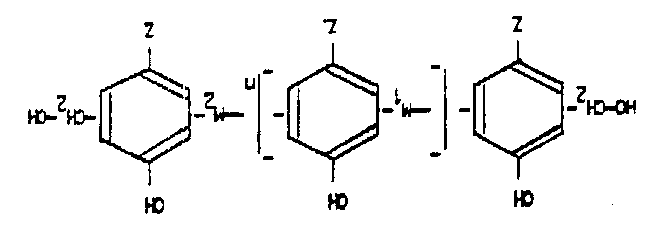 wobei
M1 und M2 -CH2- oder -CH2-CO-CH2-Radikale sind, die gleich oder unterschiedlich sein können,
Z ist eine Alkenyl-, Aryl- oder Alkyl-Radikale, enthaltend von 4 bis 16 Kohleatomen,
n ist eine ganze Zahl zwischen 0 und 6.

4. Verfahren nach einem beliebigen der vorstehenden Patentansprüche, **dadurch gekennzeichnet**, dass das Phenolharz ein Phenol-Formaldehyd-Harz nach folgender Formel ist:

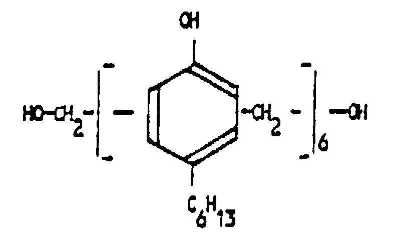

5. Verfahren nach einem beliebigen der vorstehenden Patentansprüche, **dadurch gekennzeichne**t, dass die Salizylsäure in der Zusammensetzung mit einem Anteil voll 0.05 bis 12 Teilen auf 100 Gewichtsanteile von EPDM-Elastomer vorhanden ist.

6. Thermoplastische Elastomer-Zusammensetzung, enthaltend wenigstens ein EPDM-Elastomer und wenigstens ein Polyolefin, wobei die elastomerische Phase teilweise oder voll vernetzt ist, **dadurch gekennzeichnet**, dass die Vernetzung mit Hilfe von Salizylsäure und nicht-halogenisiertem Phenolharz erhalten wird, und zwar nach folgender Formel: 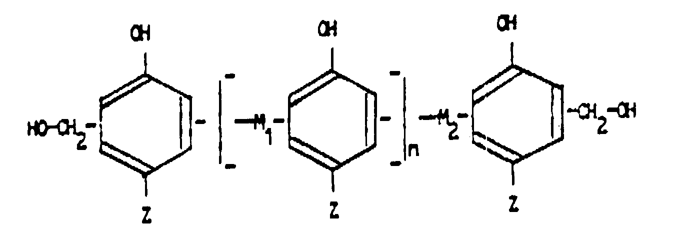 wobei
M1 und M2 -CH2- oder -CH2-CO-CH2-Radikale sind, die gleich oder unterschiedlich sein können,
Z ist eine Alkenyl-, Aryl- oder Alkyl-Radikale, enthaltend von 4 bis 16 Kohleatomen,
n ist eine ganze Zahl zwischen 0 und 6.

7. Thermoplastische Elastomer-Zusammensetzung nach Patentanspruch 6, **dadurch gekennzeichnet**, dass das Phenolharz ein Phenol-Formaldehyd-Harz nach folgender Formel ist:

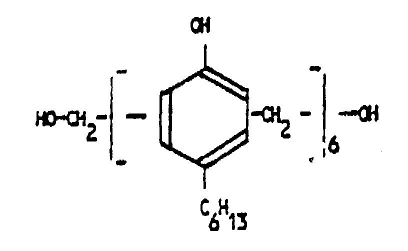

8. Thermoplastische Elastomer-Zusammensetzung nach Patentanspruch 6 und Patentanspruch 7, **dadurch gekennzeichnet**, dass das olefinische Monomer, aus welchem das Polyolefin erhalten wird, aus der Gruppe gewählt ist, die aus Äthylen, Propylen, Buten-1, Penten-1, Hexen-1, 4-Methyl-1-Penten, 3-Methyl-1-Penten, 3,3-Dimethyl-1-Buten, 3-Methyl-1-Hexen und 2,4,4-Trimethyl-1-Penten besteht.

9. Thermoplastische Elastomer-Zusammensetzung nach den Patentansprüchen von 6 bis 8, **dadurch gekennzeichnet**, dass das EPDM-Terpolymer aus wenigstens zwei olefinischen Monomeren und aus einem Dien-Monomer bestellt.

10. Thermoplastische Elastomer-Zusammensetzung nach den Patentansprüchen von 6 bis 9, **dadurch gekennzeichnet**, dass das Dien-Monomer aus der Gruppe gewählt ist, die aus Äthlyiden-Norbonen, 1,4-Hexadien, Dizyklopentadien, 2-Methyl-1,4-Pentadien, 1,4,9-Decatrien, 1,5-Zyklooktadien, 1-Methyl-1,5Zyklooktadien, Polybutadien und deren Derivaten besteht.

11. Thermoplastische Elastomer-Zusammensetzung nach den Patentansprüchen von 6 bis 10, **dadurch gekennzeichnet**, dass die Salizylsäure in der Zusammensetzung von 0.05 bis 12 Gewichtsanteilen auf 100 Gewichtsanteile von EPDM-Elastomer vorhanden ist.

12. Thermoplastische Elastomer-Zusammensetzung nach den Patentansprüchen von 6 bis 11, **dadurch gekennzeichnet**, dass das Verhältnis Salizylsäure/nicht-halogenisiertes Phenolharz von 0.1:1 bis 0.3:1 ist.

13. Thermoplastische Elastomer-Zusammensetzung nach den Patentansprüchen von 6 bis 12, **dadurch gekennzeichnet**, dass sie von 10-90% Polyolelin und von 90-10% EPDM-Polymer enthält.

14. Thermoplastische Elastomer-Zusammensetzung nach den Patentansprüchen von 6 bis 13, **dadurch gekennzeichnet**, dass die olefinischen Monomere aus Äthylen und/oder Propylen und/oder 1-Buten bestehen.

15. Thermoplastische Elastomer-Zusammensetzung nach den Patentansprüchen von 6 bis 14, hergestellt nach dem Verfahren nach den Patentansprüchen von 1 bis 5 und geeignet zur Erzeugung von spritzgegossenen, extrudierten und beschichteten Artikeln.

## Revendications

1. Procédé pour la fabrication d'un élastomère thermoplastique comprenant au moins un élastomère EPDM et au moins une polyoléfine et ayant la phase élastomérique partiellement ou complètement réticulée, caractérisé en ce que les mélanges contenant 10% à 80% en poids de terpolymère EPDM sont soumis à mastication à une température égale à ou plus élevée que le point de fusion de l'oléfine thermoplastique et pendant une période de temps suffisante à assurer un mélange complet et une réticulation partielle ou complète de la phase caoutchouteuse EPDM contenue dans le mélange lui-même en présence d'un système de réticulation comportant 0,5-15 parties en poids sur 100 parties d'EPDM, d'une résine phénolique non-halogénée et acide salicylique.

2. Procédé selon la revendication 1, caractérisé en ce que la température de mastication varie de 160 à 240°C.

3. Procédé selon la revendication 1 ou la revendication 2, caractérisé en ce que la résine phénolique non halogénée correspond à la formule générale suivante: 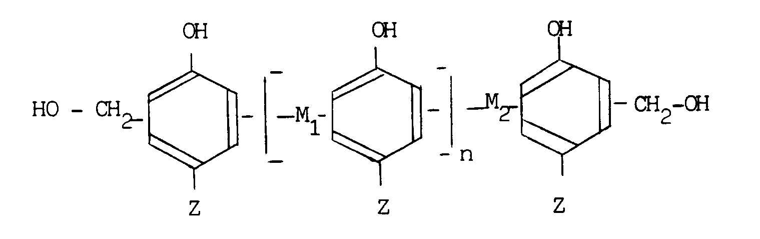 où:
M1 et M2, qui peuvent être égaux ou différents, sont des radicaux -CH2 ou CH2-CO-CH2-,
Z est un radical alcoylénique, arylique ou alcoylique contenant de 6 à 16 atomes de carbone, et
n est un nombre entier de 0 à 6.

4. Procédé selon une des revendications précédentes, caractérisé en ce que la résine phénolyque est une résine phénol-formaldéhyde ayant la formule suivante:

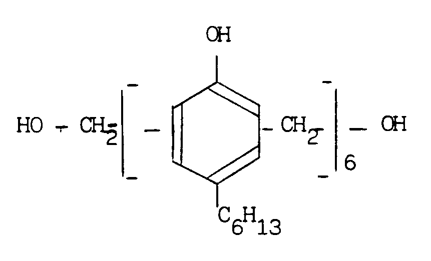

5. Procède selon une des revendications précédentes, caractérisé en ce que l'acide salicylique est présent dans la composition en une quantité variant de 0,05 à 12 parties en poids sur 100 parties en poids d'élastomère EPDM.

6. Elastomère thermoplastique comprenant au moins un élastomère EPDM et au moins une polyoléfine et ayant la phase élastomérique partiellement ou complètement réticulée, caractérisé en ce que la réticulation est obtenue au moyen d'acide salicylique et une résine phénolique non-halogénée de formule: 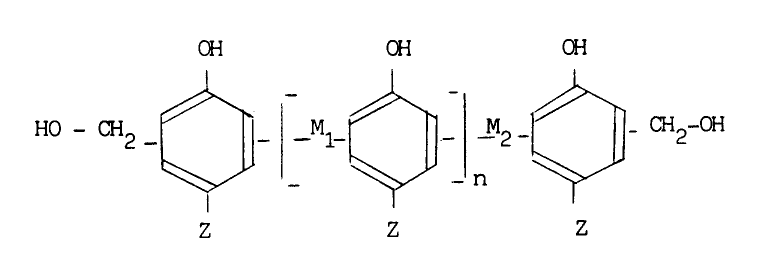 où
M1 et M2, qui peuvent être égaux ou différents, sont des radicaux -CH2 ou CH2-CO-CH2-,
Z est un radical alcoylénique, arylique ou alcoylique contenant de 6 à 16 atomes de carbone, et
n est un nombre entier de 0 à 6.

7. Elastomère thermoplastique selon la revendication 6, caractérisé en ce que la résine phénolique est une résine phénol-formaldéhyde de formule:

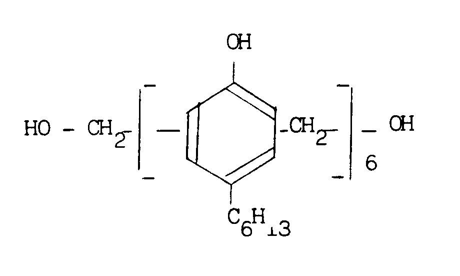

8. Elastomère thermoplastique selon la revendication 6 et la revendication 7, caractérisé en ce que le monomère oléfinique duquel est obtenue la polyoléfine est choisi parmi le groupe comprenant éthylène, propylène, 1-butène, 1-pentène, 1-hexène, 4-méthyle-1-pentène, 3-méthyle-1-pentène, 3,3-diméthyle-1-butène, 3-méthyle-1-hexène et 2,4,4-triméthyle-1-pentène.

9. Elastomère thermoplastique selon les revendications 6 à 8, caractérisé en ce que le terpolymère EPDM comporte au moins deux monomères oléfiniques et un monomère diénique.

10. Elastomère thermoplastique selon les revendications 6 à 9, caractérisé en ce que le monomère diénique est choisi parmi le groupe comprenant éthylidène-norbornène, 1,4-hexadiène, dicyclopentadiène, 2-méthyle-1,4-pentadiène, 1,4,9-décatriène, 1,5-cyclooctadiène, 1-méthyle-1,5-cyclooctadiène, 1,4-cyclopentadiène, polybutène, polybutadiène et leurs dérivés.

11. Elastomère thermoplastique selon les revendications 6 à 10, caractérisé en ce que l'acide salicylique est présent dans la composition en une quantité variant de 0,05 à 12 parties en poids sur 100 parties en poids d'élastomère EPDM.

12. Elastomère thermoplastique selon les revendications 6 à 11, caractérisé en ce que le rapport en poids acide salicylique : résine phénolique non halogénée est de 0,1:1 à 0,3:1.

13. Elastomère thermoplastique selon les revendications 6 à 12, caractérisé en ce qu'il contient 10 à 90% de polyoléfine et 90 à 10% de terpolymère EPDM.

14. Elastomère thermoplastique selon les revendications 6 à 13, caractérisé en ce que les monomères oléfiniques sont éthylène et/ou propylène et/ou 1-butène.

15. Elastomère thermoplastique selon les revendications 6 à 14, préparé suivant le procédé des revendications 1 à 5 et destiné à la fabrication d'articles moulés, extrudés et laminés.
